(19) Europäisches Patentamt
European Patent Office
Office européen des brevets

(11) Publication number: **0 545 428 A1**

# (12) EUROPEAN PATENT APPLICATION

(21) Application number: **92120732.0**

(22) Date of filing: **04.12.92**

(51) Int. Cl.5: **C08K 7/14**, C08K 3/04, C08L 81/02, //(C08K7/14,3:04, C08L81:02,23:06)

(30) Priority: **06.12.91 US 802904**

(43) Date of publication of application: **09.06.93 Bulletin 93/23**

(84) Designated Contracting States: **AT BE DE DK ES FR GB IT NL**

(71) Applicant: **PHILLIPS PETROLEUM COMPANY**
**5th and Keeler**
**Bartlesville Oklahoma 74004(US)**

(72) Inventor: **Johnson, Timothy Walter**
**1520 Smysor Drive**
**Bartlesville, OK 74006(US)**

(74) Representative: **Geissler, Bernhard, Dr. jur., Dipl.-Phys. Patent- und Rechtsanwälte et al**
**Bardehle-Pagenberg-Dost-Altenburg-Frohwitter-Geissler & Partner**
**Postfach 86 06 20**
**W-8000 München 86 (DE)**

## (54) Poly (arylene sulfide) compositions containing graphite powder.

(57) A rapidly crystallizing composition comprising poly(arylene sulfide), glass fiber and graphite powder and a method for making same is provided.

EP 0 545 428 A1

## Field of the Invention

This invention relates to poly(arylene sulfide) compositions. In another aspect, this invention relates to poly(arylene sulfide) compositions which exhibit improved crystallinity properties. In yet another aspect, this invention relates to methods of preparing such compositions.

## Background of the Invention

Poly(arylene sulfide) resins have become well known in the art for their thermal resistance, chemical resistance, good overall electrical insulative properties, unusual insolubility and inherent flame resistance. Poly(arylene sulfide) resins can be compounded with fillers and reinforcing fibers to enhance certain of these properties and to provide compounds useful in more specific applications. For example, glass reinforcement of poly(arylene sulfide) resins produces injection and compression molding compounds which exhibit high tensile strength, high flexural modulus, good flexural strength, high heat deflection temperature, low elongation, and moderate impact strength.

The excellent physical properties of poly(arylene sulfide) resins make these compounds highly useful in manufacturing articles by injection molding techniques. However, the production of shaped articles from poly(arylene sulfide) compounds by injection molding can require high mold temperatures and relatively long molding cycle times which long molding cycle times which reduce productivity of the molding machine. It would, therefore, be desirable to have a rapidly crystallizable poly(arylene sulfide) resin so that shorter mold cycle times and/or lower mold temperatures could be utilized to increase profitability. A convenient measure of the rapidity of crystallization is the melt crystallization temperature, defined as the temperature at which crystallization reaches its maximum velocity when the polymer is cooled at a prescribed rate such as 20 °C per minute.

It is an object of this invention to provide a method of producing a more rapidly crystallizable poly-(arylene sulfide) resin by increasing the melt crystallization temperature of the poly(arylene sulfide) resin. Other objects, aspects, and the several advantages of this invention will be apparent to those skilled in the art upon a study of the specification and the appended claims.

## Summary of the Invention

According to the invention, a rapidly crystallizable composition is provided which has among its components 40-80 weight percent of a poly(arylene sulfide), 25-60 weight percent glass fiber and 0.05-5 weight percent graphite powder. In a further embodiment, the composition contains at least one other additive selected from organosilanes, polyethylene, pigments and hydrotalcites. In a preferred embodiment, the poly(arylene sulfide) of the composition is an essentially linear, high molecular weight polymer when in an uncured state.

Further according to the invention, processes for making each of the above-defined compositions are provided.

Further according to the invention, an article of manufacture, more specifically a molded article, is formed from each of the above-defined compositions.

## Detailed Description of the Invention

This invention relates to rapidly crystallizable poly(arylene sulfide) compositions which contain graphite powder. The term poly(arylene sulfide) is intended to designate crystallizable arylene sulfide polymers. The scope of this invention broadly encompasses all such polymers.

Suitable poly(arylene sulfide) polymers include, but are not limited to those described in U.S. Patent No. 3,354,129 and U.S. Patent No. 3,919,177. Examples of poly(arylene sulfide) polymers suitable for purposes of this invention include among others poly(4,4'-biphenylene sulfide) and poly(phenylene sulfide). Because of its availability and desirable properties (such as high chemical resistance, non-flammability, and high strength and hardness) poly(phenylene sulfide) is the presently preferred poly(arylene sulfide).

Graphite powders suitable for the invention include graphite powders which are both naturally occurring and synthetically produced.

The graphite powder can be in dry form or can be in the form of a suspension in a suitable carrier. Suitable graphite powders in dry form will generally have particle sizes in the range of about 1 microns to about 1 mm. In one embodiment of this invention, it is presently preferred to employ graphite powders having ash contents of about 5% and lower, since the use of such graphite powders appears to result in

maintenance of the mechanical properties of the compositions.

The glass fiber useful in the present invention can be chosen from any of those products commercially available which generally find use as fillers and reinforcing agents in polymeric compositions. Generally, glass fibers of about 1/8 to about 2 inches in length are incorporated.

In a further preferred embodiment, the glass fiber of the composition, as described above, has a diameter of less than about 13 microns. The presently preferred glass fiber is G-filament type glass fiber. An example of a G-filament type glass fiber is Owens Corning 497EE which has an average diameter of about 9 microns.

The compositions of the invention can optionally contain an organosilane compound selected from epoxy functional, amino functional, mecapto functional and alkyl functional silanes and organo functional polysulfide silanes. The organo functional polysulfide silanes have the general formula

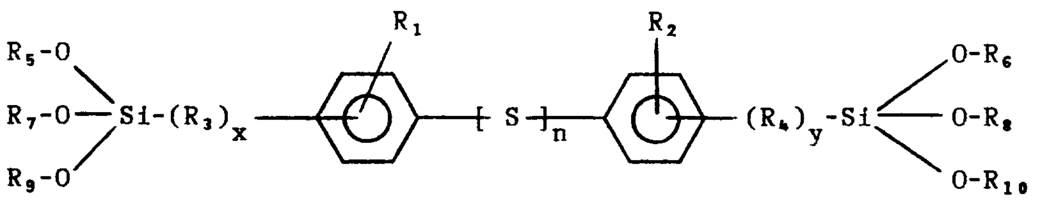

(I)

The number of sulfur atoms (S) linking the two aromatic groups determined by the value of n which represents a positive integer and ranges from 1 to 30. A subgenus within the scope of this invention is represented by the above formula wherein n ranges from 1 to 10. The preferred value of n is from 1 to 5.

Each of $R_1$ and $R_2$ is H or an alkyl group having 1 to 30 carbon atoms. Each of $R_5$, $R_6$, $R_7$, $R_8$, $R_9$ and $R_{10}$ is an alkyl group having from 1 to 30 carbon atoms. The alkyl groups associated with $R_1$, $R_2$, $R_5$, $R_6$, $R_7$, $R_8$, $R_9$ and $R_{10}$ can be linear (e.g. n-propyl) or branched (e.g. tert-butyl).

Each of the letters x and y represent either 1 or 0. When $x = 0$, $R_3$ is absent from formula I and the Si bond extends to a carbon member of the corresponding aromatic ring. When $x = 1$, $R_3$ is as defined below. In a similar manner when $y = 0$, $R_4$ is absent from formula I and the Si bond extends to a carbon member of the corresponding aromatic ring. When $y = 1$, $R_4$ is as defined below. Each of $R_3$ and $R_4$, when present (i.e. when $x = 1$, $y = 1$), is an alkylene group having from 1 to 30 carbon atoms. The alkylene group can be linear or branched.

Other functional silanes can be trialkoxysilanes which contain the particular functional groups. Examples of such trialkoxysilanes include gamma-glycidoxypropyltrimethoxysilane, 3-mercaptopropyltrimethoxysilane, 3-aminopropyltriethoxysilane, N-beta-(aminoethyl)-gamma-aminopropyltrimethoxysilane, methyltrimethoxysilane and tetrapropoxysilane.

Such organosilanes, if employed, will generally be present in the compositions of the invention in an amount of from about 0.01 to about 2 weight percent, preferably from about 0.4 to about 1.2 weight percent, and most preferably from about 0.6 to about 1.0 weight percent based on the weight of the total composition.

As is usual in polymeric compositions based on poly(arylene sulfide), a variety of other additives can optionally be used in minor amounts up to about 2 weight percent of the total composition. These additives include such materials as mold release agents such as polyethylene, pigments, mold corrosion inhibitors such as hydrotalcites and lithium carbonate, and other nucleating agents.

The pigments optionally employed in the compositions are those conventionally known which can tolerate the relatively high processing temperatures required, e.g. 600F, for poly(arylene sulfide). Typical examples include titanium dioxide, iron oxide, cadmium sulfide, phthalocyanine blue, carbon black and the like and mixtures thereof.

The hydrotalcites optionally employed in the compositions as mold corrosion inhibitors can be a natural or synthetic material which corresponds roughly to naturally-occurring minerals having chemical structures such as $Mg_6Al_2(OH)_{16}CO_3 \cdot 4\ H_2O$ or $Al_2O_3 \cdot 6\ MgO \cdot CO_2 \cdot 12\ H_2O$. Although the magnesium/aluminum hydrates are the most common cationic species for the hydrotalcites, various metals can be substituted. For example, magnesium can be replaced by calcium, zinc, copper, manganese, lithium or nickel; and aluminum can be replaced by chromium (plus 3) or iron. The anionic species can also vary, with carbonate or phosphate the most likely candidates. The most readily available hydrotalcite compounds will be magnesium-aluminum hydroxy carbonate hydrates. The preferred hydrotalcite compound is magnesium aluminum hydroxy carbonate hydrate, which is available under the commercial name DHT-4A sold by Kyowa Chemical Industry Company, Ltd., Osaha, Japan, which is characterized by the manufacturer as

$Mg_{4.5}Al_2(OH)_{13}CO_3 \cdot 3.5\ H_2O$.

The compositions of this invention can be made in accordance with any method wherein the poly-(arylene sulfide), glass fiber, graphite powder and other components (if any) are combined to form a mixture. Many suitable methods are well known to those of skill in the art. By way of example, the components of the composition can be mixed together at room temperature in a rotating drum blender or in an intensive mixer, such as a Henschel mixer, and then extrusion compounded and pelletized at a temperature above about the melting point of the poly(arylene sulfide) to produce a uniform blend.

Once made, the compositions of the invention can be used to form molded articles in accordance with any method suitable for molding thermoplastic compositions. Such methods are well known in the art. The compositions can, for example, be introduced into an injection molding apparatus to produce a melt which is extruded into an injection mold wherein the molded article is formed.

A first embodiment of the invention is a composition comprising 40-80 weight percent of a poly(arylene sulfide), 25-60 weight percent glass fiber and 0.05-5 weight percent graphite powder.

The poly(arylene sulfide) of the composition is preferably present in an amount of about 45 to about 70 weight percent and most preferably about 50 to 60 weight percent based on the total composition.

The glass fiber of the composition is defined above and is preferably present in an amount of about 30 to about 55 weight percent and most preferably about 35 to about 45 weight percent based on the total composition.

The graphite powder of the composition is defined above and is preferably present in an amount of about 0.05 to about 5 weight percent and most preferably about 0.5 to about 2 weight percent based on the total composition.

The composition optionally contains at least one additive selected from the group consisting of organosilanes, mold release agents, pigments, and mold corrosion inhibitors. When an organosilane is used, an epoxy functional silane is preferred. The preferred epoxy functional silane is gamma-glycidoxypropyltrimethoxysilane. If a polyethylene is used, a high density polyethylene is preferred.

The poly(arylene sulfide) employed in this invention can be in a cured or uncured state. The invention is expected to be particularly beneficial for poly(arylene sulfide) resins and compounds which, in the absence of the rate-enhancing additive, crystallize slowly.

In a preferred embodiment, the poly(arylene sulfide) of the composition is an essentially linear, high molecular weight polymer when in an uncured state. Essentially linear poly(arylene sulfide), as used herein, is defined as a polymer having no branching or such a small amount of branching as to have substantially no effect on the polymer properties. For example, the amount of polyhaloaromatic impurity found in the dihaloaromatic used in the poly(arylene sulfide) polymerization process would not be sufficient to cause the resultant poly(arylene sulfide) to be outside the essentially linear definition).

Curing is defined herein as a distinct process step after polymer drying comprising a thermal treatment of the polymer in the presence of an oxygen-containing atmosphere. The preferred oxygen-containing atmosphere is air. In one curing process, the treatment can be above the melting point for semi-crystalline polymers or alternately, the treatment can be above the softening point for amorphous polymers. A second curing process is a solid state process in which the polymer is heated to a temperature up to but below the melting point of a semi-crystalline polymer or alternately, up to but below the softening point of an amorphous polymer. The solid state curing process is currently preferred for curing large quantities of polymer, such as in a commercial process. For example, the solid state curing of poly(phenylene sulfide), which has a melting point of about 540F, is generally carried out at a temperature of about 350F to about 500F.

The essentially linear, high molecular weight poly(arylene sulfide) can be prepared by the process of U.S. Patent No. 3,919,177, which is incorporated by reference herein, but any process which produces an essentially linear, high molecular weight poly(arylene sulfide) is acceptable. The preferred essentially linear, high molecular weight poly(arylene sulfide) is poly(phenylene sulfide). The melt flow of the essentially linear, high molecular weight poly(phenylene sulfide) is less than about 1000, preferably about 250 to about 650, and most preferably about 350 to about 550 prior to curing and about 50 to about 400, preferably about 150 to about 300, most preferably about 215 to about 250, after curing. The melt flow of all poly-(phenylene sulfide) polymers referred to herein is determined using ASTM D 1238-86 condition 315/5.0 modified to use a 5 minute preheat time.

In a further preferred embodiment, the essentially linear, high molecular weight poly(arylene sulfide) can optionally be acid washed during the poly(arylene sulfide) recovery process according to a process similar to that disclosed in U.S. Patent No. 4,801,664. Any suitable organic or inorganic acid which is water soluble can be used in the acid washing process. Examples of suitable organic acids include, but are not limited to, acetic acid, formic acid, oxalic acid, fumaric acid, and monopotassium phthalic acid. The presently

preferred organic acid is acetic acid. Examples of suitable inorganic acids include, but are not limited to, hydrochloric acid, monoammonium phosphate, sulfuric acid, phosphoric acid, boric acid, nitric acid, sodium dihydrogenphosphate, ammonium dihydrogenphosphate, and carbonic acid. The presently preferred inorganic acid is hydrochloric acid.

Example

In this example, ten poly(phenylene sulfide) compositions identified as compositions 1-10) are compared to determine the effect of graphite powder on melt crystallization temperature and mechanical properties. The components of each composition are given in Table I.

Each composition was prepared as follows. The specified components were weighed into a polyethylene bag and dry blended by shaking at ambient temperature until the mixture appeared homogeneous. The mixture was then further blended using a 1 1/2 " diameter Davis Standard Extruder with a barrel temperature of 620F, a 24/1 L/D ratio, a 3:1 metering screw ratio and a screw speed of 80 rpm; then the material was forced through a strand die and chopped. The melt crystallization temperature (Tmc) of the compositions were determined using differential scanning calorimetry (DSC). For the mechanical tests, the chopped material was injection molded using an Arburg ECO molding machine (extruder temperature of 600F and mold temperature of 275F) into test specimens. The test specimens were annealed at 200C for 2 hours. The test specimens produced were tensile bars (dogbone shaped having dimensions of 1/16 inch thick by 4 inches long by 1/4 or 3/4 inch wide depending on the location on the specimen) and flexural bars (1/8 inch thick by 5 inches long by 1/2 inch wide).

The test specimens were evaluated according to the following test procedures:

| | |
|---|---|
| Tensile: | ASTM D 638 type IV bars, crosshead speed of 0.5 cm/min. |
| Flexural Modulus and Flexural Strength: | ASTM D 790 |
| IZOD impact strength, Unnotched: | ASTM D256 |

The results of the evaluation are presented in Table II.

Table I

| Composition | Weight Percentages of Components[a] | | | | | |
|---|---|---|---|---|---|---|
| | PPS[b] | Glass Fiber[c] | Powdered Graphite | Organosilane[d] | PE[e] | Hydrotalcite[f] |
| 1[g] | 57.95 | 40 | -- | 0.8 | 0.25 | 1.0 |
| 2 | 56.95 | 40 | 1[h] | 0.8 | 0.25 | 1.0 |
| 3 | 56.95 | 40 | 1[i] | 0.8 | 0.25 | 1.0 |
| 4 | 56.95 | 40 | 1[j] | 0.8 | 0.25 | 1.0 |
| 5 | 56.95 | 40 | 1[k] | 0.8 | 0.25 | 1.0 |
| 6 | 56.95 | 40 | 1[l] | 0.8 | 0.25 | 1.0 |
| 7 | 56.95 | 40 | 1[m] | 0.8 | 0.25 | 1.0 |
| 8 | 56.95 | 40 | 1[n] | 0.8 | 0.25 | 1.0 |
| 9 | 56.95 | 40 | 1[o] | 0.8 | 0.25 | 1.0 |
| 10 | 56.95 | 40 | 1[p] | 0.8 | 0.25 | 1.0 |

(a) The weight percentages are based on the total weight of the components in the composition
(b) Cured Ryton® poly(phenylene sulfide), Phillips 66 Company; Grade PR-20; nominal melt flow of about 200 g/10 min.
(c) Owens Corning Grade 497
(d) Union Carbide TC-100 gamma-glycidoxypropyltrimethoxy silane
(e) Marlex® high density polyethylene Grade TR-161, Phillips 66 Company having nominal melt index of 30 measured using ASTM D 1238-86 Condition 190/2.16.
(f) DHT-4A, Kyowa Chemical Industry Co., Ltd
(g) Control
(h) Alpha Grade 00641 Graphite Powder
(i) Alpha Grade 00642 Graphite Powder
(j) Alpha Grade 88765 Graphite Powder
(k) Superior Graphite Co. Grade 3735
(l) Superior Graphite Co. Grade 3739
(m) Superior Graphite Co. Grade 2135
(n) Superior Graphite Co. Grade 4735
(o) Superior Graphite Co. Grade 5035
(p) Superior Graphite Co. Grade 5039

Table II

| Composition | Tmc(°C) -20°C/min | -160°C/min | Tensile Strength(a) | Elongation (%) | Flexural Strength(a) | Flexural Modulus(b) | IZOD Impact Strength(c) Unnotched |
|---|---|---|---|---|---|---|---|
| 1(d) | 220 | 163 | 23.6 | 1.3 | 40.3 | 2.1 | 13.89 |
| 2 | 230 | 193 | 24.1 | 1.4 | 40.3 | 2.1 | 11.5 |
| 3 | 231 | 194 | 25.0 | 1.5 | 39.9 | 2.1 | 10.9 |
| 4 | 231 | 176 | 21.1 | 1.2 | 39.4 | 2.1 | 10.3 |
| 5 | 231 | 196 | 22.6 | 1.3 | 38.0 | 2.0 | 11.1 |
| 6 | 232 | 194 | 21.8 | 1.2 | 37.0 | 2.1 | 10.5 |
| 7 | 230 | 187 | 23.1 | 1.3 | 39.9 | 2.1 | 12.3 |
| 8 | 229 | 195 | 24.9 | 1.4 | 40.0 | 2.1 | 11.9 |
| 9 | 230 | 195 | 24.7 | 1.4 | 40.6 | 2.1 | 13.3 |
| 10 | 229 | 193 | 24.8 | 1.4 | 40.5 | 2.1 | 13.8 |

(a) Units of ksi

(b) Units of msi

(c) Units of ft-$lb_f$/in.

(d) Control

The results in Table II, compositions 1-10 indicate that the addition of graphite powder (compositions 2-10) produces comparable overall mechanical properties to the control (composition 1) and increased melt crystallization temperature.

## Claims

1. A composition comprising
   (a) 40 to 80 weight percent of a poly(arylene sulfide), preferably poly(phenylene sulfide), that is an essentially linear, high molecular weight polymer having a melt flow of less than about 1000 when in an uncured state,
   (b) 25 to 60 weight percent glass fiber, and
   (c) 0.05 to 5 weight percent graphite powder.

2. A composition according to claim 1 wherein said graphite powder is present in an amount of about 0.5 to about 2 weight percent based on the total weight of said composition.

3. A composition comprising
   (a) 40 to 80 weight percent of a poly(arylene sulfide), preferably poly(phenylene sulfide), that is an essentially linear, high molecular weight polymer having a melt flow of less than about 1000 in an uncured state,
   (b) 20 to 60 weight percent glass fiber; and
   (c) 0.05 to 5 parts by weight graphite powder based on components (a) plus (b) being 100 parts by weight.

4. A composition according to claim 1, 2 or 3 further comprising at least one additive selected from the group consisting of organosilanes, mole release agents, pigments, and mold corrosion inhibitors.

5. A composition according to one of the preceding claims wherein said composition contains an organosilane, in particular wherein said organosilane is an epoxy functional silane.

6. A composition according to claim 5 wherein said graphite powder has an ash content below about 5%, said epoxy functional silane is gamma-glycidoxypropyltrimethoxysilane and said composition contains a high density polyethylene and a hydrotalcite.

7. A composition according to one of the preceding claims wherein said glass fiber has a diameter of less than about 13 microns.

8. A composition according to one of the preceding claims wherein said poly(arylene sulfide) has been cured to a melt flow in a range of about 50 to about 400 prior to forming said composition and is acid washed prior to curing, in particular wherein said acid is acetic acid.

9. A process for making a poly(arylene sulfide) composition comprising combining poly(arylene sulfide), glass fiber, graphite powder and other components, if present, in the form and amounts as specified in one of the claims 1 to 8 to form a mixture.

10. An article of manufacture comprising a molded article made with a composition of one of the claims 1 to 8.

European Patent Office

# EUROPEAN SEARCH REPORT

Application Number

EP 92 12 0732

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 917 516 (BAYER)<br>* page 2, line 20 - line 30 *<br>* page 3, line 60 - line 61; example 4 *<br>* claims 1,4 *<br>--- | 1,2,9,10 | C08K7/14<br>C08K3/04<br>C08L81/02<br>//(C08K7/14,3:04<br>)<br>//(C08L81/02,<br>23:06) |
| A | EP-A-0 417 759 (PHILLIPS PETROLEUM)<br><br>* page 2, line 47 - page 3, line 2 *<br>* page 4, line 3 - line 8 *<br>* page 5, line 49 - line 54 *<br>* page 6, line 27 - line 36 * | 1,3,4,<br>5-10 | |
| A | * page 8; example 1; table 1 * | 1,6 | |
| A | * page 6, line 1 - line 18 *<br>* claims 1-6,10,15,19,31 *<br>----- | 1,8 | |

TECHNICAL FIELDS SEARCHED (Int. Cl.5 )

C08K
C08L

The present search report has been drawn up for all claims

| Place of search | Date of completion of the search | Examiner |
|---|---|---|
| THE HAGUE | 12 MARCH 1993 | ENGEL S.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document